(19) Europäisches Patentamt
European Patent Office
Office européen des brevets

(11) **EP 4 603 757 A1**

(12) **EUROPEAN PATENT APPLICATION**
published in accordance with Art. 153(4) EPC

(43) Date of publication:
**20.08.2025 Bulletin 2025/34**

(21) Application number: **23876249.6**

(22) Date of filing: **29.06.2023**

(51) International Patent Classification (IPC):
**F24F 11/64** (2018.01)

(52) Cooperative Patent Classification (CPC):
F24F 2110/62; F24F 2110/64; Y02B 30/70

(86) International application number:
**PCT/CN2023/104216**

(87) International publication number:
**WO 2024/078040 (18.04.2024 Gazette 2024/16)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **11.10.2022 CN 202211243370**

(71) Applicant: **GD Midea Air-Conditioning Equipment Co., Ltd.**
**Foshan, Guangdong 528311 (CN)**

(72) Inventors:
• **ZHAI, Haoliang**
**Foshan, Guangdong 528311 (CN)**
• **FAN, Qifeng**
**Foshan, Guangdong 528311 (CN)**
• **SHANG, Zhe**
**Foshan, Guangdong 528311 (CN)**

(74) Representative: **Ran, Handong**
**Maucher Jenkins**
**Seventh Floor Offices**
**Artillery House**
**11-19 Artillery Row**
**London SW1P 1RT (GB)**

(54) **AIR CONDITIONER CONTROL METHOD BASED ON OPERATING POWER, AND AIR CONDITIONER AND READABLE STORAGE MEDIUM**

(57) An air conditioner control method based on an operating power, and an air conditioner and a readable storage medium. The method comprises: acquiring an uncontrollable operating parameter of an air conditioner; on the basis of the uncontrollable operating parameter, predicting an operating power which corresponds to each parameter combination of controllable operating parameters of the air conditioner, wherein there are at least two controllable operating parameters, and the operating power corresponds to a parameter combination which is formed by means of combining parameters among all of the controllable operating parameters; and controlling the air conditioner to operate according to a target operating parameter combination.

FIG. 2

# EP 4 603 757 A1

**Description**

**CROSS-REFERENCE TO RELATED APPLICATIONS**

The present application claims priority to Chinese Patent Applications No. 202211243370.9, filed on October 11, 2022, the entire contents of which are incorporated herein by reference.

**TECHNICAL FIELD**

The present application relates to the technical field of air conditioner control, in particular to a method for controlling an air conditioner based on an operation power, an air conditioner and a readable storage medium.

**BACKGROUND**

Air conditioners consume a large proportion of electricity in home appliances, and low-power air conditioners are often more popular among consumers in the home appliance market. In the relevant technical solutions to reduce the power consumption of air conditioners, energy saving is often achieved by adjusting the operation frequency of the air conditioner, such as the common ecology conservation optimization (ECO) mode.

However, the traditional way of achieving energy saving of the air conditioner based on the operation frequency of the air conditioner is easy to cause the cooling capacity or cooling temperature of the air conditioner to fluctuate, and there is a defect of easily over-temperature due to its backward feedback principle based on genetic algorithm (GA), that is, the execution logic of first detection and then execution.

The above contents are only used to assist in understanding the technical solution of the present application and do not constitute an admission that the above contents are prior art.

**SUMMARY**

The main purpose of the present application is to provide a method for controlling an air conditioner based on an operation power, aiming to solve the problem of how to avoid overheating of the air conditioner.

To achieve the above object, the present application provides a method for controlling an air conditioner based on an operation power, including:

> obtaining uncontrollable operation parameters of the air conditioner;
> predicting an operation power corresponding to each parameter combination of the controllable operation parameters of the air conditioner based on the uncontrollable operation parameters; the controllable operation parameters includes at least two, and the operation power corresponds to a parameter combination composed of each parameter combination of all controllable operation parameters;
> determining a target operation parameter combination meeting a target operation power according to the operation power; and
> controlling the air conditioner to operate according to the target operation parameter combination.

In an embodiment, the determining the target operation parameter combination meeting the target operation power according to the operation power includes:

> predicting an achievable operation power based on a predicted operation power and a current operation power of the air conditioner;
> obtaining the target operation power expected to be achieved;
> determining the parameter combination meeting the target operation power according to the achievable operation power and the target operation power expected to be achieved; and
> determining the parameter combination as the target operation parameter combination.

In an embodiment, the target operation power includes an operation power curve, an operation power interval, or a preset power threshold, and the determining the parameter combination meeting the target operation power according to the predicted achievable operation power and the target operation power expected to be achieved includes:

> determining, from various operation powers predicted to be achievable, a parameter combination corresponding to a power point of a current working cycle in a preset operation power curve as a parameter combination meeting the target operation power; or

determining, from various operation powers predicted to be achievable, a parameter combination corresponding to the operation power in a preset operation power interval as a parameter combination meeting the target operation power; or

determining, from various operation powers predicted to be achievable, a parameter combination corresponding to the operation power differing from the preset operation power threshold by a preset threshold as a parameter combination meeting the target operation power.

In an embodiment, the determining the parameter combination corresponding to the operation power meeting the target operation power as the target operation parameter combination includes:

in response to that more than two parameter combinations meeting the target operation power are provided, selecting one parameter combination as the target operation parameter combination according to a preset rule.

In an embodiment, the selecting one parameter combination as the target operation parameter combination according to the preset rule includes:

calculating an energy efficiency ratio corresponding to the parameter combination, and determining the parameter combination corresponding to the highest energy efficiency ratio as the target operation parameter combination; or obtaining a comfort value corresponding to an operation of the air conditioner according to each parameter combination, and determining the parameter combination with the comfort value being closest to a preset comfort value as the target operation parameter combination; or

obtaining a health value corresponding to an operation of the air conditioner according to each parameter combination, and determining the parameter combination with the health value being closest to a preset health value as the target operation parameter combination.

In an embodiment, the predicting the operation power corresponding to each parameter combination of the controllable operation parameters of the air conditioner includes:

obtaining a parameter combination of uncontrollable operation parameters of the air conditioner;
determining various parameter combinations of controllable operation parameters of the air conditioner; and
determining the operation power corresponding to each of the parameter combinations according to a mapping relationship between the controllable operation parameters, the uncontrollable operation parameters and the operation power.

In an embodiment, before the predicting the operation power corresponding to each parameter combination of the controllable operation parameters of the air conditioner, the method further includes:

recording the controllable operation parameters and the uncontrollable operation parameters of the air conditioner in each operation cycle, and a historical operation power of the air conditioner after each operation cycle; and
performing data training according to historical operation records of the air conditioner to generate a mapping relationship between the controllable operation parameters, the uncontrollable operation parameters and the operation power, so as to predict the operation power based on a generated mapping relationship.

In an embodiment, the method for controlling the air conditioner further includes:
at preset operation cycles, obtaining the uncontrollable operation parameters of the air conditioner in a current operation cycle, so as to predict the controllable operation parameters, determine the target operation parameter combination and control an operation of the air conditioner in each operation cycle.

In addition, to achieve the above-mentioned purpose, the present application also provides an air conditioner, including: a memory, a processor, and an air conditioner control program, based on an operation power, stored in the memory and executable on the processor; the air conditioner control program based on the operation power, when executed by the processor, implements the steps of the method for controlling the air conditioner based on the operation power.

In addition, to achieve the above-mentioned purpose, the present application also provides a computer-readable storage medium; an air conditioner control program based on an operation power is stored on the computer-readable storage medium, and when the air conditioner control program based on the operation power is executed by a processor, the steps of the method for controlling the air conditioner based on the operation power are implemented.

The embodiment of the present application provides a method for controlling an air conditioner based on an operation power, an air conditioner and a readable storage medium. The method includes: obtaining uncontrollable operation parameters of the air conditioner; predicting an operation power corresponding to each parameter combination of the controllable operation parameters of the air conditioner based on the uncontrollable operation parameters; the controllable operation parameters include at least two, and the operation power corresponds to a parameter combination composed of each parameter combination of all controllable operation parameters; determining a target operation parameter combination meeting a target operation power according to the operation power; and controlling the air conditioner to operate according to the target operation parameter combination. The control of the operation power strategy is achieved by constructing a power prediction model. Compared with the backward feedback principle of the traditional GA algorithm, the operation parameters are adjusted before overheating or frequency fluctuation of the air conditioner occurs, so as to avoid overheating of the air conditioner, thereby meeting the heat load requirements of the air conditioner under different working environments.

**BRIEF DESCRIPTION OF THE DRAWINGS**

FIG. 1 is a schematic diagram of the structure of a hardware operating environment according to an embodiment of the present application.
FIG. 2 is a flow chart of a method for controlling an air conditioner based on an operation power according to a first embodiment of the present application.
FIG. 3 is a flow chart of the method for controlling the air conditioner based on the operation power according to a second embodiment of the present application.

The realization of the purpose, functional features and advantages of the present application will be further explained in conjunction with embodiments and with reference to the accompanying drawings.

**DETAILED DESCRIPTION OF THE EMBODIMENTS**

At present, with the increasing demand for air conditioners, the power consumption of air conditioners is also increasing. When purchasing an air conditioner, you should not only consider comfort and convenience, but also the power consumption of the air conditioner. Energy-saving air conditioners are a good choice. The existing energy-saving solutions for air conditioners are all based on backward feedback, that is, the operation compressor frequency is adjusted only when the operation power exceeds or falls below the set temperature. In this way, it is easy for the temperature to fluctuate frequently before reaching the set temperature, or even to over-reach the temperature, which not only causes a poor user experience, but also fails to achieve an improvement in energy saving effects.

The present application aims to improve the energy-saving effect of air conditioners. The present application proposes a method for controlling air conditioners. Specifically, the present application constructs a power prediction model to control the operation power strategy. Compared with the traditional GA algorithm backward feedback principle, the present application adjusts the operation parameters before overheating or frequency fluctuation of the air conditioner occurs, avoiding overheating of the air conditioner and thus meeting the heat load of the air conditioner in different working environments.

In order to better understand the above technical solution, exemplary embodiments of the present application will be described in more detail below with reference to the accompanying drawings. Although exemplary embodiments of the present application are shown in the accompanying drawings, it should be understood that the present application can be implemented in various forms and should not be limited by the embodiments described herein. On the contrary, these embodiments are provided to enable a more thorough understanding of the present application and to fully convey the scope of the present application to those skilled in the art.

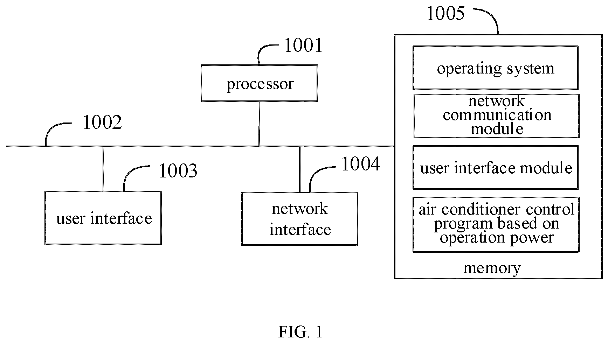

As an implementation scheme, FIG. 1 is a schematic diagram of the structure of the hardware operating environment involved in the embodiment scheme of the present application.

As shown in FIG. 1, the air conditioner may include: a processor 1001, such as a CPU, a memory 1005, a user interface 1003, a network interface 1004, and a communication bus 1002. Among them, the communication bus 1002 is used to realize the connection and communication between these components. The user interface 1003 may include a display, an input unit such as a keyboard, and the user interface 1003 may also include a standard wired interface and a wireless interface. The network interface 1004 may include a standard wired interface and a wireless interface (such as a WI-FI interface). The memory 1005 may be a high-speed RAM memory, or a stable memory (non-volatile memory), such as a disk memory. The memory 1005 may also be a storage device independent of the aforementioned processor 1001.

Those skilled in the art will appreciate that the air conditioner structure shown in FIG. 1 does not limit the air conditioner and may include more or fewer components than shown, or a combination of certain components, or a different arrangement of components.

As shown in FIG. 1, the memory 1005 as a storage medium may include an operating system, a network communication module, a user interface module, and an air conditioner control program based on operation power. The operating system is a program for managing and controlling the hardware and software resources of the air conditioner, the air conditioner control program based on operation power, and the operation of other software or programs.

In the air conditioner shown in FIG. 1, the user interface 1003 is mainly used to connect to the terminal and communicate data with the terminal; the network interface 1004 is mainly used for the background server and communicates data with the background server; the processor 1001 can be used to call the air conditioner control program based on operation power stored in the memory 1005.

In an embodiment, the air conditioner includes: a memory 1005, a processor 1001, and an air conditioner control program ,based on operation power, stored in the memory and executable on the processor;

When the processor 1001 calls the air conditioner control program, based on the operation power, stored in the memory 1005, the following operations are performed:

Obtaining uncontrollable operation parameters of the air conditioner;
Based on the uncontrollable operation parameters, predicting the operation power corresponding to each parameter combination of the controllable operation parameters of the air conditioner; the controllable operation parameters include at least two, and the operation power corresponds to a parameter combination composed of each parameter combination of all controllable operation parameters;
Determining a target operation parameter combination meeting a target operation power according to the operation power;
Controlling the air conditioner to operate according to the target operation parameter combination.

When the processor 1001 calls the air conditioner control program, based on the operation power, stored in the memory 1005, the processor 1001 also performs the following operations:

Predicting the achievable operation power based on the predicted operation power and the current operation power of the air conditioner;
Obtaining the target operation power expected to be achieved;
Determining a parameter combination meeting the target operation power according to the predicted achievable operation power and the target operation power expected to be achieved;
Determining the parameter combination corresponding to the operation power variation meeting the target operation power as the target operation parameter combination.

When the processor 1001 calls the air conditioner control program, based on the operation power, stored in the memory 1005, the processor 1001 also performs the following operations:
The target operation power includes an operation power curve, an operation power interval or a preset power threshold, and the step of determining the parameter combination meeting the target operation power according to the predicted achievable operation power and the target operation power expected to be achieved includes:

Determining, from the various operation powers predicted to be achievable, a parameter combination corresponding to a power point of the current working cycle in a preset operation power curve as a parameter combination meeting the target operation power; or
Determining, from the various operation powers predicted to be achievable, a parameter combination corresponding to the operation power in a preset operation power interval as a parameter combination meeting the target operation power; or
Determining, from the predicted achievable operation powers, a parameter combination corresponding to the operation power that differs from the preset operation power threshold by a preset threshold as a parameter combination meeting the target operation power.

When the processor 1001 calls the air conditioner control program, based on the operation power, stored in the memory 1005, the processor 1001 also performs the following operations:
When there are more than two parameter combinations that meet the target operation power, one parameter combination is selected as the target operation parameter combination according to a preset rule.

When the processor 1001 calls the air conditioner control program, based on the operation power, stored in the memory 1005, the processor 1001 also performs the following operations:

Calculating the energy efficiency ratio corresponding to the parameter combination, and determining the parameter combination corresponding to the highest energy efficiency ratio as the target operation parameter combination; or
Obtaining the comfort value corresponding to the operation of the air conditioner according to each parameter combination, and determining the parameter combination whose comfort value is closest to the preset comfort value as the target operation parameter combination; or

Obtaining the health value corresponding to the air conditioner when operating according to each parameter combination, and determining the parameter combination whose health value is closest to the preset health value as the target operation parameter combination.

When the processor 1001 calls the air conditioner control program, based on the operation power, stored in the memory 1005, the processor 1001 also performs the following operations:

Obtaining a parameter combination of the uncontrollable operation parameters of the air conditioner;

Determining various parameter combinations of the controllable operation parameters of the air conditioner;

Determining the operation power corresponding to each of the parameter combinations according to a mapping relationship between the controllable operation parameters, the uncontrollable operation parameters and the operation power.

When the processor 1001 calls the air conditioner control program, based on the operation power, stored in the memory 1005, the processor 1001 also performs the following operations:

Recording the controllable operation parameters and uncontrollable operation parameters of the air conditioner in each operation cycle, and the historical operation power of the air conditioner after each operation cycle;

Performing data training according to the historical operation records of the air conditioner to generate a mapping relationship between the controllable operation parameters, the uncontrollable operation parameters and the operation power, so as to predict the operation power based on the generated mapping relationship.

Based on the hardware architecture of the air conditioner based on the above-mentioned air conditioning control technology, an embodiment of the method for controlling the air conditioner based on the operation power of the present application is proposed.

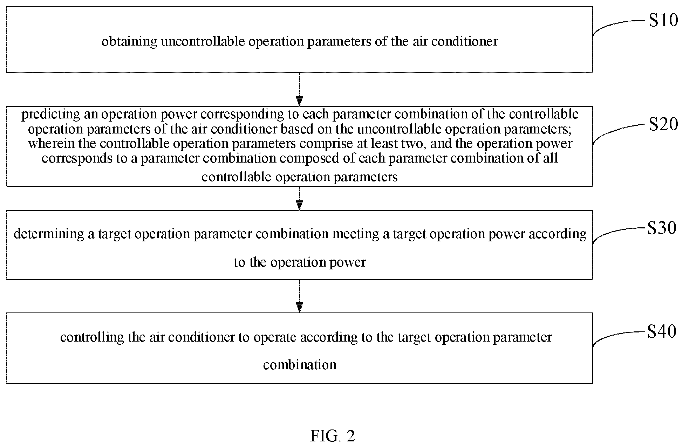

Referring to FIG. 2, in a first embodiment, the method for controlling the air conditioner based on the operation power includes:

Step S10, obtaining uncontrollable operation parameters of the air conditioner;

Step S20, predicting the operation power corresponding to each parameter combination of the controllable operation parameters of the air conditioner based on the uncontrollable operation parameters; the controllable operation parameters include at least two, and the operation power corresponds to a parameter combination composed of each parameter combination of all controllable operation parameters;

In an embodiment, the uncontrollable operation parameters of the air conditioner are first obtained, and then based on the uncontrollable operation parameters and the operation parameter combination formed by multiple controllable operation parameters in the current working cycle, the operation power of the air conditioner in the next cycle is predicted.

In an embodiment, the air conditioner is preset with an interval working cycle T, and the operation parameters of the air conditioner are collected every preset interval period T. In an embodiment, the working cycle can be set to 30 seconds. The operation parameters of the air conditioner include controllable operation parameters and uncontrollable operation parameters. The controllable operation parameters are characterized by the controllable operation parameters of the air conditioner itself, such as the internal fan speed, the external fan speed and the compressor frequency, etc.; the uncontrollable operation parameters are characterized by the uncontrollable parameters of the air conditioner itself, such as the indoor and outdoor temperature, the indoor and outdoor humidity, the exhaust valve temperature and other environmental parameters that affect the operation of the air conditioner but cannot be set, or the target temperature, the set target wind speed and other user-set parameters. Operation parameter combination. The operation parameter combination includes multiple controllable operation parameters related to the operation power of the air conditioner.

It should be noted that the controllable operation parameters include, for example, one or more of the internal fan speed, the external fan speed, or the compressor operation frequency. The controllable operation parameters can be set to correspond to one or more parameter combinations, and the size and number of parameter combinations corresponding to the controllable operation parameters of different models of air conditioners are different. If there are two or more controllable operation parameters, each parameter combination of the controllable operation parameters can constitute a parameter combination.

In an embodiment, the step of predicting the operation power may be: first, obtaining a parameter combination of uncontrollable operation parameters in the air conditioner (including but not limited to indoor and outdoor temperature, indoor and outdoor humidity, exhaust valve temperature, set temperature, etc.), and then determining each parameter combination of the controllable operation parameters of the air conditioner (including but not limited to internal fan speed, external fan speed and compressor frequency, etc.), constructing a mapping relationship between controllable operation parameters, uncontrollable operation parameters and operation power, and based on the mapping relationship, determining the operation power corresponding to each parameter combination.

In an embodiment, in order to accurately predict the operation power when the air conditioner overheating has not occurred, it is necessary to construct a mapping relationship between the operation parameter combination of the controllable operation parameters and the operation power. Therefore, before this step, the controllable operation parameters and uncontrollable operation parameters in each operation cycle of the air conditioner are recorded. The operation parameters, and the operation power after each cycle of the air conditioner are recorded as the historical operation power; and then according to the historical operating records (that is, the controllable operation parameters, uncontrollable operation parameters and operation power of the historical records), through data training, the relationship between the controllable operation parameters, uncontrollable operation parameters and operation power is generated, so as to perform the step of predicting the operation power based on the generated mapping relationship.

Exemplarily, in some embodiments, assuming that the air conditioner is in the 5th cycle at this time (i.e., 120-150 seconds after startup), the uncontrollable operation parameters obtained in the current cycle are: operation power Tin5=27.6, outdoor temperature Tout5=34.3, indoor humidity Hin5=62, outdoor humidity Hout5=65, exhaust valve temperature Tp5=45, user set temperature Ts5=24, user set wind speed Ws5=60, and the controllable operation parameters obtained are: indoor fan speed Sin=1200, outdoor fan speed Sout=820, and compressor frequency Pr=50.

Then, the historical operation combination is (Tin, Tout, Hin, Hout, Tp, Ts, Ws, Sin, Sout, Pr).

The operation power of the working cycle air conditioner is W5=1800. The above historical parameter combination is used as the independent variable, and the operation power W5 is used as the dependent variable. The power model yi (W) reflecting the mapping relationship between the historical parameter combination and the historical operation power is trained using the machine learning/deep learning algorithm:

$$yi\ (W) = fi\ (Tin, Tout, Hin, Hout, Tp, Ts, Ws, Sin, Sout, Pr)$$

Based on the power model yi (W), the operation power W6=1850 in the sixth cycle (ie, 150-180 seconds after startup) is predicted.

Step S30, determining a target operation parameter combination meeting the target operation power according to the operation power;

In an embodiment, after the operation power is predicted, a target operation parameter combination of the air conditioner meeting the next working cycle is determined according to the operation power.

In an embodiment, the step of determining the target operation parameter combination may be: predicting the achievable operation power based on the predicted operation power and the current operation power of the air conditioner; then obtaining the target operation power expected to be achieved; and then determining the operation power based on the relative size relationship between the predicted achievable operation power and the target operation power expected to be achieved, as the operation power meeting the target operation power; determining the parameter combination corresponding to the operation power; and using the parameter combination as the target operation parameter combination.

In an embodiment, the target operation power includes an operation power curve, an operation power interval, or a preset power threshold. If the target operation power is an operation power curve, then from each operation power, the operation power corresponding to the power point in the preset operation power curve is determined as the operation power meeting the target operation power. If the target operation power is an operation power interval strategy, then from each operation power, the operation power corresponding to the operation power in the preset operation power interval is determined as the operation power meeting the target operation power. If the target operation power is a preset power threshold strategy, from each operation power, the operation power corresponding to the operation power that differs from the preset operation power threshold by a preset threshold is determined as the operation power meeting the target operation power.

It should be noted that the target operation power expected to be achieved can be a single threshold. When the target operation power expected to be achieved is a single threshold, that is, in any cycle, the target operation power expected to be achieved is fixed. In an embodiment, the target operation power expected to be achieved can also be a change value in the temperature change curve, that is, in different cycles, the target operation power expected to be achieved is changed.

In an embodiment, the target operation power expected to be achieved can be preset by the user, that is, the target operation power expected to be achieved is actually the operation power set by the user. For example, the expected operation power change curve can be planned on the temperature adjustment application of the air conditioner, that is, the target operation power expected to be achieved in each cycle is planned. Ideally, when the air conditioner is working, the operation power can meet the target operation power expected to be achieved on the expected operation power change curve. In an embodiment, the operation power change curve can be planned by the user, that is, the operation power change curve can be formulated according to the user's own needs; it can also be fixedly written into the air conditioner control program with each model of air conditioner when leaving the factory; the operation power change curve can also be modified according to actual usage during the operation of the air conditioner. In an embodiment, corresponding operation power change curves can be formulated for different operating modes of the air conditioner, for example, corresponding operation power change curves can be formulated for sleep mode and energy-saving mode, so as to achieve energy saving while improving comfort.

In an embodiment, the controllable operation parameters may include at least two, and a combination of multiple controllable operation parameters includes but is not limited to an internal fan speed, an external fan speed and a compressor frequency, or a combination of an external fan speed and a compressor frequency; the predicted operation power corresponds to a parameter combination composed of each parameter combination of all controllable operation parameters.

In an embodiment, the controllable operation parameter may also be one, such as parameters related to the operation power of the air conditioner, such as the internal fan speed, the external fan speed, and the compressor frequency.

In an embodiment, in order to make the power consumption of the air conditioner sufficiently low while keeping the operation power as large as possible to achieve refined control of the operation power, the target operation parameter combination can be determined by the energy efficiency ratio. The energy efficiency ratio can be determined by the ratio of the output capacity and the operation energy efficiency of the air conditioner when it is operated according to the parameter combination.

In an embodiment, in order to ensure the comfort level of the human body when the air conditioner is running, the target operation parameter combination can be determined by the comfort value, which is a quantitative value of the comfort level of the human body in the environment under the air conditioner. The preset comfort value can be a value of the temperature, relative humidity, and wind speed that the human body is relatively comfortable with in the environment.

In an embodiment, the comfort value may be determined by temperature, relative humidity and/or air outlet speed of the air conditioner.

For example, the temperature T0 at which the human body is in a relatively comfortable state is set to 24°C, the relative humidity RH0 is set to 30%, and the wind speed V0 is set to 0.2 m/s. Under the aforementioned temperature T, relative humidity RH, and wind speed V, based on the preset mapping relationship, the preset comfort value determined is 100. The closer to the aforementioned parameters, the closer the corresponding comfort value is to 100.

The corresponding comfort values of the determined parameter combinations H1, H2, and H3 are 80, 93, and 72, respectively. H2 is selected as the target parameter combination.

In an embodiment, since the air-conditioned room is highly sealed and indoor and outdoor air cannot be exchanged, harmful microorganisms such as bacteria and viruses in the indoor air are easy to breed and multiply, which can easily cause low air quality. Therefore, this embodiment also provides a method for determining the most suitable target parameter combination from multiple parameter combinations based on a health value. The health value is represented by a quantitative value of the degree of health impact on the human body caused by being under the air conditioner for a long time.

In an embodiment, the preset health value can be determined by the indoor and outdoor temperature difference, relative humidity and/or the particle CADR value of the air conditioner. The higher the particle CADR value, the stronger the air conditioner's purification ability for fresh air under the current parameter combination.

Exemplarily, the indoor and outdoor temperature difference $\Delta T$ is set to 5°C when the human body is in a state with a relatively low degree of impact on health; the relative humidity RH is set to 40%, and the particulate matter CADR is set to 220m/h. Based on the preset mapping relationship, the preset health value is determined to be 100.

Among the determined parameter combinations H4, H5, and H6, the corresponding health values are 73, 85, and 92, respectively, so H6 is selected as the target parameter combination.

Step S40, controlling the air conditioner to operate according to the target operation parameter combination.

In an embodiment, after the target operation parameter combination is determined, the air conditioner is controlled to operate according to the determined target operation parameter combination.

In the technical solution provided in this embodiment, the operation power corresponding to the controllable operation parameters of the air conditioner is predicted, and a target operation parameter combination meeting the target operation power is determined according to the operation power. The air conditioner is controlled to operate according to the target operation parameter combination, and the operation power strategy is controlled by building a power prediction model. Compared with the traditional GA algorithm backward feedback principle, the operation parameters are adjusted before overheating or frequency fluctuation of the air conditioner occurs, so as to avoid overheating of the air conditioner, thereby meeting the heat load of the air conditioner under different working environments.

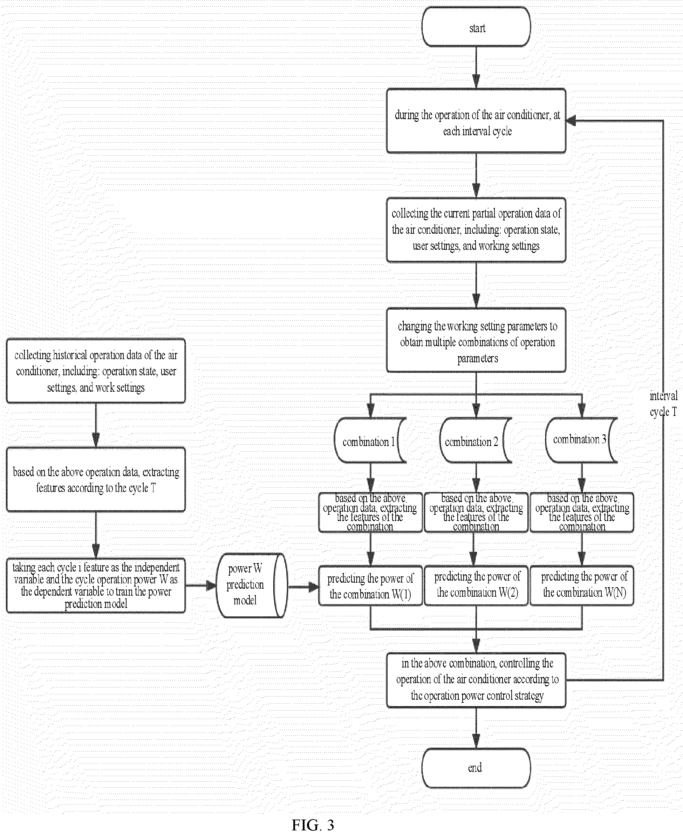

In addition, as another implementation scheme, the flowchart of the second embodiment of the method for controlling the air conditioner based on the operation power of the present application can be shown in FIG. 3.

In this embodiment, during the operation of the air conditioner, part of the operation data of the air conditioner is collected at intervals, including the operation state, user settings and working settings. Among them, the operation state includes the operation power, outdoor temperature, indoor humidity, outdoor humidity Hout, exhaust valve temperature, parameters that affect the operation of the air conditioner but cannot be set; the user setting includes the set temperature, set wind speed and other parameters actively set by the user; and the working setting includes the internal fan speed, the external fan speed, the compressor operation frequency and other parameters set by the air conditioner. Then, the working setting parameters of the air conditioner are changed to obtain a plurality of operation parameter combinations, namely, combination 1, combination 2...combination N; based on the above collected operation data, the features in the combination are extracted, and then the power W (i.e., the target operation power) of the combination is predicted according to the features. The prediction method is to predict through a preset power prediction model (i.e., a mapping relationship), and the training steps of the power prediction model are: collecting the historical operation data of the air conditioner; the historical operation data includes the historical operation state, the historical user settings and the historical working settings; then extracting the feature data in the historical operation data; taking the feature data as the independent variable, and taking the historical operation power of the air conditioner as the dependent variable; and inputting the independent variable and the dependent variable into the power prediction model for training. The operation of the air conditioner is controlled according to the control strategy corresponding to the power W (i.e., the operation parameters corresponding to the target operation power).

In addition, it can be understood by those skilled in the art that all or part of the processes in the method for implementing the above embodiment can be completed by instructing the relevant hardware through a computer program. The computer program includes program instructions, and the computer program can be stored in a storage medium, which is a computer-readable storage medium. The program instructions are executed by at least one processor in the air conditioner to implement the process steps of the embodiment of the above method.

Therefore, the present application also provides a computer-readable storage medium. The computer-readable storage medium stores an air conditioner control program based on operation power, and when the air conditioner control program based on the operation power is executed by a processor, the steps of the method for controlling the air conditioner based on the operation power as described in the above embodiment are implemented.

Among them, the computer-readable storage medium can be a U disk, a mobile hard disk, a read-only memory (ROM), a magnetic disk or an optical disk, and other computer-readable storage media that can store program codes.

It should be noted that since the storage medium provided in the embodiment of the present application is the storage medium used to implement the method of the embodiment of the present application, based on the method introduced in the embodiment of the present application, the those skilled in the art can understand the specific structure and deformation of the storage medium, so it is not repeated here. All storage media used in the method of the embodiment of the present application belong to the protection scope of the present application.

Those skilled in the art will appreciate that the embodiments of the present application may be provided as methods, systems, or computer program products. Therefore, the present application may adopt the form of a complete hardware embodiment, a complete software embodiment, or an embodiment in combination with software and hardware. Moreover, the present application may adopt the form of a computer program product implemented in one or more computer-usable storage media (including but not limited to disk storage, CD-ROM, optical storage, etc.) that contain computer-usable program code.

The present application is described with reference to the flowchart and/or block diagram of the method, device (system) and computer program product according to the embodiment of the present application. It should be understood that each process and/or box in the flowchart and/or block diagram, and the combination of the process and/or box in the flowchart and/or block diagram can be realized by computer program instructions. These computer program instructions can be provided to a processor of a general-purpose computer, a special-purpose computer, an embedded processor or other programmable data processing device to produce a machine, so that the instructions executed by the processor of the computer or other programmable data processing device produce a device for realizing the function specified in one process or multiple processes in the flowchart and/or one box or multiple boxes in the block diagram.

These computer program instructions may also be stored in a computer-readable memory that can direct a computer or other programmable data processing device to work in a specific manner, so that the instructions stored in the computer-readable memory produce a manufactured product including an instruction device that implements the functions specified in one or more processes in the flowchart and/or one or more boxes in the block diagram.

These computer program instructions may also be loaded onto a computer or other programmable data processing device so that a series of operational steps are executed on the computer or other programmable device to produce a computer-implemented process, whereby the instructions executed on the computer or other programmable device provide steps for implementing the functions specified in one or more processes in the flowchart and/or one or more boxes in the block diagram.

It should be noted that in the claims, any reference signs placed between brackets shall not be construed as limiting the claims. The word "comprising" does not exclude the presence of components or steps not listed in the claims. The word "a" or "an" preceding a component does not exclude the presence of a plurality of such components. The present application may be implemented by means of hardware comprising several different components and by means of a suitably programmed computer. In a unit claim enumerating several means, several of these means may be embodied by the same item of hardware. The use of the words first, second, and third etc. does not indicate any order. These words may be interpreted as names.

Although some embodiments of the present application have been described, those skilled in the art may make other changes and modifications to these embodiments once they have learned the basic creative concept. Therefore, the appended claims are intended to be interpreted as including some embodiments and all changes and modifications falling within the scope of the present application.

Obviously, those skilled in the art can make various changes and modifications to the present application without departing from the spirit and scope of the present application. Thus, if these modifications and variations of the present application fall within the scope of the claims of the present application and their equivalents, the present application is also intended to include these modifications and variations.

## Claims

1. A method for controlling an air conditioner based on operation power, **characterized by**:

   obtaining uncontrollable operation parameters of the air conditioner;
   predicting an operation power corresponding to each parameter combination of the controllable operation parameters of the air conditioner based on the uncontrollable operation parameters, wherein the controllable operation parameters comprise at least two, and the operation power corresponds to a parameter combination composed of each parameter combination of all controllable operation parameters;
   determining a target operation parameter combination meeting a target operation power according to the operation power; and
   controlling the air conditioner to operate according to the target operation parameter combination.

2. The method according to claim 1, wherein said determining the target operation parameter combination meeting the target operation power according to the operation power comprises:

   predicting an achievable operation power based on a predicted operation power and a current operation power of the air conditioner;
   obtaining the target operation power expected to be achieved;
   determining the parameter combination meeting the target operation power according to the predicted achievable operation power and the target operation power expected to be achieved; and
   determining the parameter combination as the target operation parameter combination.

3. The method according to claim 2, wherein the target operation power comprises an operation power curve, an operation power interval, or a preset power threshold, and said determining the parameter combination meeting the target operation power according to the predicted achievable operation power and the target operation power expected to be achieved comprises:

   determining, from various operation powers predicted to be achievable, a parameter combination corresponding to a power point of a current working cycle in a preset operation power curve as a parameter combination meeting the target operation power; or
   determining, from various operation powers predicted to be achievable, a parameter combination corresponding to the operation power in a preset operation power interval as a parameter combination meeting the target operation power; or
   determining, from various operation powers predicted to be achievable, a parameter combination corresponding to the operation power differing from the preset operation power threshold by a preset threshold as a parameter combination meeting the target operation power.

4. The method according to claim 2, wherein said determining the parameter combination corresponding to the operation power meeting the target operation power as the target operation parameter combination comprises:
   in response to that more than two parameter combinations meeting the target operation power are provided, selecting one parameter combination as the target operation parameter combination according to a preset rule.

**5.** The method according to claim 4, wherein said selecting one parameter combination as the target operation parameter combination according to the preset rule comprises:

calculating an energy efficiency ratio corresponding to the parameter combination, and determining the parameter combination corresponding to the highest energy efficiency ratio as the target operation parameter combination; or
obtaining a comfort value corresponding to an operation of the air conditioner according to each parameter combination, and determining the parameter combination with the comfort value being closest to a preset comfort value as the target operation parameter combination; or
obtaining a health value corresponding to an operation of the air conditioner according to each parameter combination, and determining the parameter combination with the health value being closest to a preset health value as the target operation parameter combination.

**6.** The method according to claim 1, wherein said predicting the operation power corresponding to each parameter combination of the controllable operation parameters of the air conditioner comprises:

obtaining a parameter combination of uncontrollable operation parameters of the air conditioner;
determining various parameter combinations of controllable operation parameters of the air conditioner; and
determining the operation power corresponding to each of the parameter combinations according to a mapping relationship between the controllable operation parameters, the uncontrollable operation parameters and the operation power.

**7.** The method according to any one of claims 1 to 6, wherein before said predicting the operation power corresponding to each parameter combination of the controllable operation parameters of the air conditioner, the method further comprises:

recording the controllable operation parameters and the uncontrollable operation parameters of the air conditioner in each operation cycle, and a historical operation power of the air conditioner after each operation cycle; and
performing data training according to historical operation records of the air conditioner to generate a mapping relationship between the controllable operation parameters, the uncontrollable operation parameters and the operation power, so as to predict the operation power based on the generated mapping relationship.

**8.** The control method according to claim 1, wherein the method for controlling the air conditioner further comprises: at interval preset operation cycles, obtaining the uncontrollable operation parameters of the air conditioner in a current operation cycle, so as to predict the controllable operation parameters, determine the target operation parameter combination, and control an operation of the air conditioner in each operation cycle.

**9.** An air conditioner, comprising: a memory, a processor, and an air conditioner control program, based on an operation power, stored in the memory and executable on the processor, wherein the air conditioner control program based on the operation power, when executed by the processor, implements the steps of the method for controlling the air conditioner based on the operation power according to any one of claims 1 to 8.

**10.** A computer-readable storage medium, wherein an air conditioner control program based on an operation power is stored on the computer-readable storage medium, and when the air conditioner control program based on the operation power is executed by a processor, the steps of the method for controlling the air conditioner based on the operation power according to any one of claims 1 to 8 are implemented.

1005

1001

processor

1002

1003

user interface

1004

network
interface

operating system

network
communication
module

user interface module

air conditioner control
program based on
operation power

memory

FIG. 1

obtaining uncontrollable operation parameters of the air conditioner — S10

predicting an operation power corresponding to each parameter combination of the controllable operation parameters of the air conditioner based on the uncontrollable operation parameters; wherein the controllable operation parameters comprise at least two, and the operation power corresponds to a parameter combination composed of each parameter combination of all controllable operation parameters — S20

determining a target operation parameter combination meeting a target operation power according to the operation power — S30

controlling the air conditioner to operate according to the target operation parameter combination — S40

FIG. 2

FIG. 3

## INTERNATIONAL SEARCH REPORT

| International application No. |
| --- |
| **PCT/CN2023/104216** |

| A. | CLASSIFICATION OF SUBJECT MATTER |
| --- | --- |

F24F11/64(2018.01)i

According to International Patent Classification (IPC) or to both national classification and IPC

| B. | FIELDS SEARCHED |
| --- | --- |

Minimum documentation searched (classification system followed by classification symbols)

IPC:G05B,G06F, F24F, F25C

Documentation searched other than minimum documentation to the extent that such documents are included in the fields searched

Electronic data base consulted during the international search (name of data base and, where practicable, search terms used)

DWPI, CNABS, CNTXT, CJFD, GBTXT, CATXT, SGTXT, ATTXT, EPTXT, LEXTXT, USTXT, CHTXT, WOTXT: 美的, 空调, 控制, 不可控, 可控, 参数, 组合, 功率, 目标, 预测, 历史, 映射, air condition+, control, uncontrollable, controllable, parameter+, combination+, capy, objectives, predicti+, history+, map+

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| A | US 2010152905 A1 (KUSIAK, Andrew) 17 June 2010 (2010-06-17) <br> description, paragraphs 0133-0129, and figures 1-14 | 1-10 |
| A | US 2017123959 A1 (INTERNATIONAL BUSINESS MACHINES CORPORATION) 04 May 2017 (2017-05-04) <br> entire document | 1-10 |
| A | CN 110186168 A (SHENZHEN SKYWORTH AIR CONDITIONING TECHNOLOGY CO., LTD.) 30 August 2019 (2019-08-30) <br> entire document | 1-10 |
| A | CN 114777237 A (MIDEA GROUP WUHAN REFRIGERATION EQUIPMENT CO., LTD. et al.) 22 July 2022 (2022-07-22) <br> entire document | 1-10 |
| A | DE 102014210304 A1 (MTU FRIEDRICHSHAFEN GMBH) 03 December 2015 (2015-12-03) <br> entire document | 1-10 |

☐ Further documents are listed in the continuation of Box C.    ☑ See patent family annex.

| * | Special categories of cited documents: |
| --- | --- |
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| | |
| --- | --- |
| "T" | later document published after the international filing date or priority date and not in conflict with the application but cited to understand the principle or theory underlying the invention |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
| --- | --- |
| **19 September 2023** | **27 September 2023** |

| Name and mailing address of the ISA/CN | Authorized officer |
| --- | --- |
| **China National Intellectual Property Administration (ISA/ CN)** <br> **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2023/104216**

| Patent document cited in search report | | | Publication date (day/month/year) | Patent family member(s) | | | Publication date (day/month/year) |
|---|---|---|---|---|---|---|---|
| US | 2010152905 | A1 | 17 June 2010 | US | 8577822 | B2 | 05 November 2013 |
| US | 2017123959 | A1 | 04 May 2017 | None | | | |
| CN | 110186168 | A | 30 August 2019 | None | | | |
| CN | 114777237 | A | 22 July 2022 | None | | | |
| DE | 102014210304 | A1 | 03 December 2015 | DE | 102014210304 | B4 | 15 November 2018 |

Form PCT/ISA/210 (patent family annex) (July 2022)

**EP 4 603 757 A1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202211243370